# EUROPÄISCHE PATENTSCHRIFT

(11) **EP 2 722 168 B1**
(45) Veröffentlichungstag und Bekanntmachung des Hinweises auf die Patenterteilung: **14.04.2021**
(21) Anmeldenummer: 13004826.7
(22) Anmeldetag: 08.10.2013
(51) Int. Cl.: B32B 7/06, B32B 27/08, B32B 27/36

(54) **Eine wiederverschließbare Verpackung**
A reclosable package
Emballage refermable

(30) Priorität: 19.10.2012 DE 102012020533
(43) Veröffentlichungstag der Anmeldung: 23.04.2014
(73) Patentinhaber: Wipak Walsrode GmbH & Co. KG, 29699 Bomlitz (DE)
(72) Erfinder: Sperlich, Bernd, Dr., D-29664 Walsrode (DE); Dohmeier, Stefan, D-29638 Bad Fallingbostel (DE); Nelke-Bruhn, Dorit, 49762 Lathen (DE)
(74) Vertreter: Kutzenberger Wolff & Partner

(56) Entgegenhaltungen:
- EP-A1- 1 676 785
- EP-A1- 2 067 717
- EP-A1- 2 361 749
- EP-A1- 2 540 492
- EP-A2- 1 775 122
- WO-A1-2011/123410

## Beschreibung

Die vorliegende Erfindung betrifft eine wiederverschließbare Verpackung aus zwei miteinander verbundenen Verpackungselementen, wobei das erste Verpackungselement eine Mehrschichtfolie umfassend wenigstens eine Trägerschicht, wenigstens eine Schicht aus Haftklebstoff und wenigstens eine heißsiegelbare Siegelschicht aus wenigstens einem nicht kristallisationsfähigen Copolyester und das zweite Verpackungselement eine ggf. mehrschichtige Folie umfassend eine Schicht aus wenigstens einem Polyester aufweist, und die beiden Verpackungselemente über eine Siegelnaht derart verbunden sind, dass im Siegelnahtbereich die Siegelfestigkeit zwischen der Siegelschicht und der Polyester-Schicht größer ist als die Verbundhaftung zwischen der Haftklebstoff-Schicht und der Siegelschicht bzw. einer Schichtfolge umfassend die Siegelschicht, wodurch beim ersten Öffnen der Verpackung die Haftklebstoff-Schicht im Bereich der Siegelnaht zum Wiederverschließen freigegeben wird, und der nicht kristallisationsfähige Copolyester der Siegelschicht als Diol-Komponente eine Mischung aus 10-50 Mol.-% wenigstens eines cycloaliphatischen (C₆-C₁₅)-Diols und 90-50 Mol.-% eines linearen aliphatischen (C₂-C₁₀)-Diols und als Dicarbonsäure-Komponente Terephthalsäure oder eine Mischung aus 50-90 Mol.-% Terephthalsäure und aus 10-50 Mol.-% Isophthalsäure und/oder wenigstens einer aliphatischen (C₆-C₁₂)-Dicarbonsäure aufweist.

Aus dem Stand der Technik sind bereits zahlreiche wiederverschließbare Verpackungen bekannt. Diese erlauben es dem Konsumenten, ein verpacktes Produkt portionsweise zu entnehmen und anschließend den verbliebenen Anteil des verpackten Produkts für eine weitere Verwendung wieder zu verschließen und zu lagern. Wiederverschließbare Verpackungen sind insbesondere bei Lebensmitteln von Bedeutung, um diese vor dem Verlust von Feuchtigkeit oder Aroma zu schützen.

Wiederverschließbare Verpackungen können aus zwei miteinander durch Siegelung verbundenen Verpackungselementen, z.B. Deckelfolie und Mulde, bestehen. Das Funktionsprinzip dieser Verpackungen besteht darin, dass beim ersten Öffnen der Verpackung die Siegelschicht am äußeren Rand der Siegelnaht durchrissen und die darunterliegende Schicht aus einem Haftklebstoff freigelegt wird. Dies funktioniert, wenn die Siegelfestigkeit zwischen den miteinander versiegelten, jeweiligen Oberflächenschichten der beiden Verpackungselemente größer ist als die Verbundhaftung zwischen der Haftklebstoff-Schicht und den angrenzenden Schichten und größer ist als die kohäsive Festigkeit der Haftklebstoff-Schicht.

Ein Wiederverschließen der Verpackung ist durch ein Aufeinanderdrücken der im Siegelnahtbereich voneinander gelösten Teile mit Hilfe der dort freigelegten Haftklebstoff-Schicht möglich.

EP 1 676 785 A1 beschreibt eine wiederverschließbare Verpackung aus einer Mehrschichtfolie, die wenigstens eine Siegelschicht, wenigstens eine Schicht aus Haftklebstoff und wenigstens eine Trägerschicht aufweist, und einem weiteren Verpackungselement, mit dem die Mehrschichtfolie so verbunden ist, dass beim ersten Aufreißen der Verpackung die Haftklebstoffschicht im Bereich der Siegelung zum Wiederverschließen freigegeben wird, wobei das weitere Verpackungselement aus einer Vielzahl von Materialien wie Kunststoff, Metall, Papier, Pappe, Karton oder Glas bestehen kann.

EP 2 361 749 A1 offenbart Behälter mit einem Deckel aus einer transparenten Mehrschichtfolie, die eine Siegelschicht (a) und eine an die Siegelschicht (a)angrenzende Schicht (b) basierend auf wenigstens einem thermoplastischen Polymeren umfasst, wobei die Verbundhaftung zwischen der Schicht (a) und der Schicht (b) niedriger ist als die Siegelfestigkeit zwischen Behälter und Deckel, so dass die Mehrschichtfolie zwischen den Schichten (a) und (b) peelbar ist. Diese Mehrschichtfolie ist jedoch nicht wiederverschließbar.

EP 2 540 492 A1 offenbart eine abziehbare Folie, die auf ein polyesterbasiertes Substrat, z.B. eine Verpackungsmulde, aufgesiegelt werden kann und eine coextrudierte mehrschichtige Struktur aufweist enthaltend eine zerreißbare, polyesterbasierte Siegelschicht und in Kontakt mit dieser zerreißbaren Siegelschicht eine Klebstoffschicht, wobei die mittlere Schälfestigkeit zwischen der Klebstoffschicht und der zerreißbaren Siegelschicht so gewählt ist, dass die Haftung der Klebstoffschicht auf der zerreißbaren Siegelschicht geringer ist als die Festigkeit der Siegelnaht, so dass das Abziehen durch Delaminierung an der Grenzfläche von Siegelschicht und Klebstoffschicht erfolgen kann. Ein Wiederverschließen ist jedoch auch bei dieser Folie nicht möglich.

Üblicherweise wird bei der kontinuierlichen Verpackung von Gütern, insbesondere von Lebensmitteln, die nicht zum einmaligen Verzehr vorgesehen sind, die wiederverschließbare Verpackung so produziert, dass aus einer vorgefertigten Kunststoff-Folie durch Thermoverformung die für das zu verpackende Gut angepassten Container, vorzugsweise Verpackungsmulden, gebildet werden, die im kontinuierlichen Betrieb mit dem zu verpackenden Gut jeweils befüllt werden. Nach der Befüllung wird, ebenfalls kontinuierlich, eine Deckelfolie über die gefüllten Behälter zugeführt und jeder dieser Behälter mit Hilfe von geeigneten Siegelstationen mit der Deckelfolie jeweils zum Verschließen der Verpackung versiegelt. Nach der Versiegelung erfolgt die Vereinzelung der Verpackung üblicherweise mit Hilfe von kontinuierlich arbeitenden Schneidewerkzeugen.

Sofern Güter, wie zum Beispiel Lebensmittel, verpackt werden, kann es während des Befüllungsschrittes immer wieder zu einer Kontamination des zur Siegelung vorgesehenen Bereichs des Verpackungscontainers, üblicherweise ein umlaufender Rand der Verpackungsmulde, kommen, insbesondere beim Verpacken von wässrige Lösungen enthaltenden Lebensmitteln. Dies ist insbesondere der Fall, wenn Frischfleischteile verpackt werden sollen, wie zum Beispiel mehrere Fleischstücke in einer Verpackung. Solche Frischfleischteile, wie zum Beispiel Geflügel-, Rind- oder Schweinefleischteile sondern immer Fleischsaft ab, so dass sich beim Verpacken, insbesondere bei der Befüllung der Verpackungsmulde mit diesen Teilen, eine Kontamination des für die spätere Versiegelung vorgesehenen Bereichs kaum vermeiden lässt.

Diese Verschmutzung des für die spätere Siegelnaht zum Verschluss der Verpackung vorgesehenen Bereichs führt dazu, dass die Siegelnaht nach dem Versiegeln nicht die notwendige Siegelfestigkeit aufweist. Diese Schwächung der Siegelnaht führt dazu, dass ggf. bei der Handhabung und Lagerung des verpackten Gutes die Siegelnaht nicht so dicht ist, so dass eine Beeinträchtigung des verpackten Gutes durch Feuchtigkeitsverlust und/oder Verlust der Haltbarkeit eintritt. Darüber hinaus führt die verminderte Siegelfestigkeit der verschmutzten versiegelten Bereiche dazu, dass die Siegelfestigkeit keineswegs höher ist als die Verbundhaftung zwischen der Siegelschicht und der Haftklebstoff-Schicht im Bereich der Siegelnaht, so dass beim ersten Öffnen der Verpackung keine Freilegung der Haftklebstoff-Schicht, sondern ein Ablösen der jeweiligen miteinander versiegelten Oberflächenschichten der beiden Verpackungselemente bevorzugt erfolgt. Damit wird beim ersten Öffnen der Verpackung keine Wiederverschließbarkeit ermöglicht.

Aufgabe der vorliegenden Erfindung war es daher, eine wiederverschließbare Verpackung bereitzustellen, deren Wiederverschließbarkeit auch bei Kontamination des Siegelnahtbereichs mit vorzugsweise flüssigen Verunreinigungen aus dem verpackten Gut gewährleistet ist.

Diese Aufgabe wird durch das Bereitstellen einer wiederverschließbaren Verpackung aus zwei miteinander verbundenen Verpackungselementen (X) und (Y) gemäß Anspruch 1 gelöst.

Das Verpackungselement (Y) der erfindungsgemäßen Verpackung weist eine ggf. mehrschichtige Kunststoff-Folie umfassend eine Schicht (i) aus wenigstens einem amorphen Polyester auf. Vorzugsweise ist die Kunststoff-Folie einschichtig, d.h. sie besteht aus der Schicht (i). In einer bevorzugten Ausführungsform besteht das Verpackungselement (Y) nur aus der Schicht (i). Ganz besonders bevorzugt ist das Verpackungselement (Y) eine bleibend thermogeformte, vorzugsweise tiefgezogene oder spritzgegossene Mulde aus Polyester.

Zur Herstellung der Schicht (i) des Verpackungselements (Y) der erfindungsgemäßen Verpackung geeignete amorphe Polyester sind vorzugsweise ausgewählt aus der Gruppe umfassend amorphe, thermoplastische aliphatische, teilaromatische und aromatische Homopolyester. Solche Homopolyester leiten sich von einem Diol, besonders bevorzugt von einem linearen, aliphatischen Alkylendiol wie z.B. Ethylenglycol, Propandiol, 1,4-Butandiol, und einer Dicarbonsäure-Komponente wie Isoterephthalsäure oder Terephthalsäure ab. Besonders bevorzugte Polyester sind amorphes PET und PBT. Mit "PET" wird Polyethylenterephthalat bezeichnet, welches aus Ethylenglykol und Terephthalsäure hergestellt wird. Mit "PBT" wird Polybutylenterephthalat bezeichnet, welches aus Butan-1,4-diol und Terephthalsäure hergestellt wird. Der amorphe Zustand wird durch das Präfix "A" gekennzeichnet. Ein ganz besonders bevorzugter, zum Einsatz kommender amorpher Polyester ist A-PET (amorphes PET). A-PET kann grundsätzlich kristallisieren, wenn die Polyesterschmelze langsam abgekühlt wird oder der Polyester über die Glasumwandlungstemperatur (T_{g}) erwärmt wird, was aber bei der Herstellung und Verarbeitung durch schnelles Abkühlen verhindert werden kann.

Vorzugsweise weist der Polyester der Schicht (i) des Verpackungselements (Y) eine Glasübergangstemperatur (T_{g}) von 60 °C bis 90 °C, vorzugsweise 65 °C bis 80 °C, bestimmt mit Hilfe der DSC-Methode auf.

Die Dicke der Schicht (i) beträgt vorzugsweise 50 bis 1500 µm, besonders bevorzugt 200 bis 1000 µm.

In der erfindungsgemäßen Verpackung wird zur Herstellung der heißsiegelbaren Siegelschicht (h) der mehrschichtigen Kunststoff-Folie des Verpackungselements (X) als Diol-Komponente eine Mischung aus α) 10-50 Mol.-%, vorzugsweise 20-40 Mol.-%, wenigstens eines cycloaliphatischen (C₆-C₁₅)-Diols und β) 90-50 Mol.-%, vorzugsweise 80-60 Mol.-%, wenigstens eines linearen, aliphatischen (C₂-C₁₀)-Diols verwendet. Als Polyol-Komponente α) ist vorzugsweise 1,4-Cyclohexandimethanol geeignet. Als Polyol-Komponente β) ist vorzugsweise Ethylenglykol geeignet. Als Dicarbonsäure-Komponente zur Herstellung des Copolyesters der Siegelschicht (h) kommt Terephthalsäure zum Einsatz. Ein besonders bevorzugter Copolyester leitet sich von Terephthalsäure, Ethylenglykol und 1,4-Cyclohexandimethanol ab.

In einer anderen Ausführungsform der erfindungsgemäßen Verpackung weist der Copolyester der Siegelschicht (h) als Dicarbonsäure-Komponente eine Mischung aus 10-50 Mol.-%, vorzugsweise 15-40 Mol.-%, Isophthalsäure und/oder wenigstens einer aliphatischen (C₆-C₁₂)-Dicarbonsäure und 50-90 Mol.-%, vorzugsweise 60-85 Mol.-% Terephtalsäure auf. Als aliphatische (C₆-C₁₂)-Dicarbonsäure eignet sich beispielsweise Adipinsäure. Als Polyol-Komponente liegt die vorstehend genannte Polyol-Zusammensetzung aus α) und β) vor. Ein bevorzugter Polyester leitet sich von Terephthalsäure, Isophthalsäure und der vorstehend genannten Polyol-Mischung ab.

Der Copolyester der Siegelschicht (h) ist nicht kristallisationsfähig. Als nicht kristallisationsfähig wird erfindungsgemäß ein Copolyester verstanden, der weder beim Erwärmen über seine Glasumwandlungstemperatur T_{g} (bestimmt mittels DSC Norm: ISO 11357-2 (1999)) und einem Abkühlen unter diese T_{g}-Temperatur noch beim Erwärmen über seine Schmelztemperatur und einem Abkühlen unter diese Temperatur kristallisiert.

Vorzugsweise weist der Copolyester der Siegelschicht (h) eine Glasübergangstemperatur (T_{g}) von 50 °C bis 110 °C, vorzugsweise 75 °C bis 85 °C, auf.

Die Glasübergangstemperatur (T_{g}) wird gemäß der vorliegenden Erfindung mittels DSC (Differential Scanning Calorimetry) bestimmt nach ISO 11357-2 (1999).

Die Glasübergangstemperaturen (T_{g}) der Schicht (i) und die der Siegelschicht (h) können identisch sein. In einer bevorzugten Ausführungsform der vorliegenden Erfindung kann die Glasübergangstemperatur (T_{g}) der Siegelschicht (h) auch höher als die Glasübergangstemperatur (T_{g}) der Schicht (i) sein.

Vorzugsweise ist im Siegelnahtbereich die Siegelfestigkeit (N/15 mm) um wenigstens 0,5 N/15 mm, vorzugsweise um wenigstens 1 N/15 mm, besonders bevorzugt um wenigstens 1,5 N/15 mm höher als die Verbundhaftung (N/15 mm) zwischen der heißsiegelbaren Schicht (i) und den daran angrenzenden Schichten.

Die Bestimmung der Siegelfestigkeit und der Verbundhaftung erfolgt gemäß den nachstehend beschriebenen Methoden. Diese Methoden können auch dazu angewendet werden, um die Polymermaterialien für den Aufbau der Siegelschicht (h) und der Schicht (i) auf ausreichende Siegelfestigkeit zu überprüfen.

Die Dicke der Siegelschicht (h) beträgt vorzugsweise 3 bis 20 µm, besonders bevorzugt 4 bis 10 µm.

Die Schicht aus Haftklebstoff (g) ist vorzugsweise aus wenigstens einem Polymeren ausgewählt aus der Gruppe umfassend Polymere und Copolymere von Acrylsäureestern; Polymere und Copolymere von Vinylethern; Copolymere aus Butadien und Styrol, bevorzugt Styrol-Butadien-Styrol Copolymer (SBS); Copolymere aus Styrol und Isopren, bevorzugt Styrol-Isopren-Styrol Blockcopolymere (SIS); Copolymere aus Styrol, Butadien und Ethylen, bevorzugt Styrol-Ethylen-Butadien-Styrol Blockcopolymere (SEBS); Polyvinylacetate; Polyurethane; Polychloroprene; Polyisobutylene; Polyisoprene; Butylkautschuk und Naturlatex aufgebaut.

Die Dicke der Haftklebstoff-Schicht (g) beträgt vorzugsweise 2 bis 20 µm, besonders bevorzugt 3 bis 15 µm.

Der Haftklebstoff kann in Form einer Lösung in wenigstens einem organischen Lösungsmittel, bevorzugt in wenigstens einem Lösungsmittel ausgewählt aus der Gruppe umfassend Ethylacetat, Methylethylketon, Hexan, Heptan und Petrolether, einer wässrigen Dispersion oder auch einer Schmelze (sogenannte "Hotmelt"-Klebstoffe) auf das Substrat aufgetragen werden. Lösungsmittelfreie, reaktive Systeme, insbesondere druckempfindliche Klebstoffe basierend auf Polyurethan, werden ggf. zur (Nach)-Härtung mit UV- oder Elektronenstrahlen bestrahlt.

Der Haftklebstoff kann auch zusammen mit zumindest einem Teil der Schichten der Schichtenfolge des Verpackungselements (X) in einem Coextrusionsverfahren extrudiert werden, da sogenannte "extrudierbare Hotmelt"-Klebstoffe auf dem Markt verfügbar sind.

Die Haftklebstoff-Schicht (g) kann ggf. Weichmacher, Füllstoffe, Konservierungsmittel, Antioxidantien, Stabilisatoren und/oder Farbstoffe aufweisen. Die erfindungsgemäß verwendeten Haftklebstoffe zeichnen sich durch einen neutralen Geruch aus und sind auch für den indirekten Kontakt mit Lebensmitteln zugelassen.

Die Schicht aus Haftklebstoff g) kann ein- oder mehrlagig sein und liegt vorzugsweise in unmittelbarem Kontakt mit der Siegelschicht h) vor. Bei einer Mehrlagigkeit der Haftklebstoff-Schicht (g) ist vorzugsweise jede Lage gleich aufgebaut, d.h. jede Lage weist vorzugsweise dieselbe Dicke auf und besteht vorzugsweise aus derselben Art von Haftklebstoff, besonders bevorzugt aus demselben Haftklebstoff.

Die Mehrschichtfolie des Verpackungselementes (X) der erfindungsgemäßen Verpackung kann ferner eine vorzugsweise transparente, gegebenenfalls zumindest teilweise bedruckte Trägerschicht (a) aufweisen. Die Trägerschicht (a) ist vorzugsweise eine Oberflächenschicht der Mehrschichtfolie und bildet vorzugsweise die Außenseite des Verpackungselementes (X).

Zur Herstellung der Trägerschicht (a) eignet sich vorzugsweise wenigstens ein thermoplastisches Polymeres.

Vorzugsweise ist die Trägerschicht (a) aus wenigstens einem thermoplastischen Polymeren ausgewählt aus der Gruppe umfassend Olefin-Homo oder Copolymere, Homo- und Copolyamide und Homo- und Copolyester aufgebaut. Besonders bevorzugt ist die Trägerschicht (a) aus wenigstens einem Homo- und/oder Copolyester aufgebaut.

Zur Herstellung der Trägerschicht (a) wird vorzugsweise dieselbe Art von Polyestern eingesetzt, welche auch zur Herstellung der Schicht (i) eingesetzt werden können.

Zur Herstellung der Trägerschicht (a) geeignete Olefin-Homo- und/oder Copolymere sind vorzugsweise Olefin-Homo-oder Copolymere von Ethylen und/oder Propylen mit ggf. weiteren α,β-ungesättigten Olefinen mit 4-10, d.h. 4,5, 6, 7, 8, 9 oder 10 Kohlenstoffatomen. Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP) und Mischungen aus wenigstens zwei der genannten Polymere. Mit "LDPE" werden Polyethylene mit niedriger Dichte bezeichnet, die eine Dichte im Bereich von 0,86-0,93 g/cm³ aufweisen und sich durch einen hohen Verzweigungsgrad der Moleküle auszeichnen. Mit "HDPE" werden Polyethylene hoher Dichte bezeichnet, welche nur eine geringe Verzweigung der Molekülkette aufweisen, wobei die Dichte im Bereich zwischen 0,94 und 0,97 g/cm³ liegen kann.

Geeignete Olefin-Copolymere sind vorzugsweise Copolymere von Ethylen und Propylen oder Copolymere von Ethylen und/oder Propylen und wenigstens einem α-Olefin mit mindestens 4, vorzugsweise mit 4-10, besonders bevorzugt mit 4-8 Kohlenstoffatomen, ganz besonders bevorzugt Copolymere von Ethylen und/oder Propylen mit wenigstens einem α-Olefin ausgewählt aus der Gruppe umfassend Buten, Hexen und Octen, deren Anteil im Olefin-Copolymeren vorzugsweise höchstens 25 mol-%, besonders bevorzugt höchstens 15 mol-%, jeweils bezogen auf das Gesamtgewicht des Olefin-Copolymeren, beträgt. Geeignete Copolymere von Ethylen und wenigstens einem α-Olefin sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm³ aufweisen. Besonders geeignete Copolymere sind Copolymere von Propylen und Ethylen, wobei der Ethylenanteil bis zu 30 Gew.-% betragen kann. Zur Herstellung der Trägerschicht (a) geeignete Homo- oder Copolyamide sind vorzugsweise ausgewählt aus der Gruppe umfassend thermoplastische aliphatische, teilaromatische und aromatische Homo- oder Copolyamide. Diese Homo- oder Copolymamide können aus aliphatischen und/oder cycloaliphatischen Diaminen mit 2-10 Kohlenstoffatomen wie Hexamethylendiamin und/oder aromatischen Diaminen mit 6-10 Kohlenstoffatomen wie p-Phenylendiamin, und aus aliphatischen und/oder aromatischen Dicarbonsäuren mit 6-14 Kohlenstoffatomen wie z.B. Adipinsäure, Terephthalsäure oder Isoterephthalsäure aufgebaut sein. Weiterhin können diese Homo- oder Copolyamide aus Lactamen mit 4-10 Kohlenstoffatomen wie z.B. aus ε-Caprolactam hergestellt werden. Besonders bevorzugte Homo- und/oder Copolyamide sind ausgewählt aus der Gruppe umfassend PA 6, PA 12, PA 66, PA 6I, PA 6T, entsprechende Copolymere und Mischungen aus wenigstens zwei der genannten Polymere.

Die Trägerschicht (a) kann orientiert, vorzugsweise monoaxial oder biaxial orientiert, besonders bevorzugt biaxial orientiert sein.

Die Trägerschicht (a) weist vorzugsweise eine Schichtdicke von 10 µm bis 100 µm, besonders bevorzugt von 12 µm bis 50 µm auf.

Vorzugsweise kann die Trägerschicht (a) mit dem übrigen Schichtverbund der Mehrschichtfolie über eine Klebstoffschicht basierend auf wenigstens einem Kaschierklebstoff (b), vorzugsweise einem Kaschierklebstoff basierend auf einem Polyurethan, besonders bevorzugt einem Zwei-Komponenten-Polyurethanklebstoff, verbunden sein.

Vorzugsweise weist die Klebstoffschicht (b) eine Schichtdicke von höchstens 10 µm, besonders bevorzugt höchstens 5 µm, ganz besonders bevorzugt von höchstens 3 µm auf.

In einer weiteren bevorzugten Ausführungsform kann die Mehrschichtfolie des Verpackungselementes (X) aus produktionstechnischen Gründen auch eine ggf. mehrlagige Schicht (c) aufgebaut aus wenigstens einem thermoplastischen Olefin-Homo- oder Copolymeren aufweisen. Zur Herstellung der Schicht (c) kann dieselbe Art von Olefin-Homo- oder Copolymeren eingesetzt werden, welche auch zur Herstellung der Trägerschicht (a) eingesetzt werden können. Bevorzugt wird wenigstens ein Ethylen-Homo- und/oder Copolymeres eingesetzt. Besonders bevorzugt besteht die Schicht (c) aus LDPE, HDPE, LLDPE oder m-PE (metallocen Polyethylen) oder einer Mischung aus mindestens zwei der genannten Polyethylene oder mindestens einem der genannten Polymeren mit einem Ethylen/Vinylacetat-Copolymeren.

In einer bevorzugten Ausführungsform der erfindungsgemäßen Verpackung umfasst die Mehrschichtfolie des Verpackungselementes (X) eine Schichtfolge aus
der Trägerschicht (a),
ggf. einer Klebstoffschicht (b),
ggf. einer Schicht (c) aus wenigstens einem thermoplastischen Olefin-Homo- oder Copolymeren,
ggf. einer Haftvermittlerschicht (d),
einer Barriereschicht (e),
ggf. einer Haftvermittlerschicht (f),
eine Haftklebstoff-Schicht (g),
und eine heißsiegelbare Siegelschicht (h).

Die Barriereschicht (e) hat vorzugsweise eine Gasbarriere- und/oder Migrationsbarrierewirkung. Die Gasbarriereschicht bedingt vorzugsweise im Wesentlichen eine Sauerstoff- und/oder Wasserdampf-Barriere. Die Migrationsbarriereschicht verhindert vorzugsweise eine Migration insbesondere von niedermolekularen Bestandteilen aus dem Verpackungsmaterial in den Innenraum der Verpackung. Dadurch lässt sich vorteilhafterweise eine Migration in das Füllgut selbst sowie eine unangenehme Geruchsbildung in der Verpackung vermeiden.

Die Barriereschicht (e) ist vorzugsweise aus wenigstens einem Polymeren ausgewählt aus der Gruppe umfassend Ethylen-Vinylalkohol-Copolymere (EVOH), zumindest teilverseifte Polyvinylacetate, Polyvinylidenchlorid (PVDC), Vinylidenchlorid-Copolymere, vorzugsweise mit einem Anteil an Vinylidenchlorid von wenigstens 80%, bezogen auf das Gesamtgewicht des Vinylidenchlorid-Copolymeren, oder einer Mischung aus wenigstens zwei der genannten Polymere, besonders bevorzugt auf wenigstens einem Ethylen-Vinylalkohol-Copolymeren, aufgebaut.

Die zur Herstellung der Barriereschicht (e) eingesetzten Ethylen-Vinylalkohol-Copolymere (EVOH) werden durch vollständige oder unvollständige Hydrolyse von entsprechenden Ethylen-Vinylacetat-Copolymeren (EVAc) gewonnen. Vorzugsweise werden vollverseifte Ethylen-Vinylacetat-Copolymere mit einem Verseifungsgrad ≥ 98% und einem Ethylen-Anteil von 0,01-80 mol-%, vorzugsweise von 1-50 mol-%, jeweils bezogen auf das Gesamtgewicht des Ethylen-Vinylalkohol-Copolymeren, eingesetzt.

Die zur Herstellung der Barriereschicht (e) eingesetzten, zumindest teilverseiften Polyvinylacetate werden durch vollständige oder unvollständige Hydrolyse von entsprechenden Polyvinylacetaten gewonnen. Besonders bevorzugt zur Herstellung der Barriereschicht (e) eingesetzte zumindest teilverseifte Polyvinylacetate sind ausgewählt aus der Gruppe umfassend vollverseifte Polyvinylacetate (Polyvinylalkohole, PVOH) mit einem Verseifungsgrad > 98 % und teilverseifte Polyvinylacetate mit einem Verseifungsgrad von 75 bis einschließlich 98%.

Die Dicke der Barriereschicht (e) beträgt vorzugsweise 0,5 bis 20 µm, bevorzugt 1 bis 10 µm.

Die ggf. vorhandenen Haftvermittlerschichten (d) und (f) sind vorzugsweise jeweils unabhängig voneinander aus wenigstens einem thermoplastischen Polymeren, welches mit polaren Gruppen, vorzugsweise mit organischen Säure-Gruppen und/oder organischen Säureanhydrid-Gruppen, besonders bevorzugt mit cyclischen organischen Säureanhydrid-Gruppen, ganz besonders bevorzugt mit Maleinsäureanhydrid-Gruppen modifiziert sind, aufgebaut. Methoden zur Modifizierung der thermoplastischen Polymere, die sich zur Herstellung der Haftvermittlerschichten (d) und (f) eignen, sind dem Fachmann bekannt. Vorzugsweise ist die Modifizierung durch Pfropfung auf den thermoplastischen Polymeren erfolgt.

Vorzugsweise sind die Haftvermittlerschichten (d) und (f) jeweils unabhängig voneinander aus wenigstens einem modifizierten thermoplastischen Olefin-Homo-und/oder Copolymeren aufgebaut. Besonders bevorzugt sind mit einem cyclischen organischen Säureanhydrid modifizierte Ethylen- oder Propylen- Homo- oder Copolymere, insbesondere mit Maleinsäureanhydrid-Gruppen modifizierte Ethylen-oder Propylen- Homo- oder Copolymere.

Vorzugsweise weisen die Haftvermittlerschichten (d) und (f) - soweit vorhanden - jeweils unabhängig voneinander eine Schichtdicke von höchstens 10 µm, besonders bevorzugt höchstens 6 µm, ganz besonders bevorzugt von höchstens 4 µm auf.

Die Gesamtdicke der Mehrschichtfolie, vorzugsweise der Schichtfolge (a) bis (h), beträgt vorzugsweise 30 µm bis 150 µm, besonders bevorzugt 50 µm bis 130 µm, ganz besonders bevorzugt 70 µm bis 120 µm, und insbesondere 80 µm bis 100 µm.

Jede der Schichten der Mehrschichtfolie kann, falls erforderlich, wenigstens eines dem Fachmann bekanntes übliches Additiv enthalten, vorzugsweise wenigstens ein Additiv ausgewählt aus der Gruppe umfassend Antiblockmittel, Farbstoffe, Antioxidantien und/oder Antistatika. Dabei kann jede der Schichten jeweils unabhängig voneinander wenigstens 0,01-20 Gew.-%, vorzugsweise wenigstens 0,1-10 Gew.-%, jeweils bezogen auf das Gesamtgewicht einer einzelnen Schicht, wenigstens eines der vorstehend genannten Additive enthalten.

Erfindungsgemäß sind die beiden Verpackungselemente (X) und (Y) über eine Siegelnaht miteinander verbunden.

Durch Einstellung des Siegeldrucks und der Siegeltemperatur kann die Siegelfestigkeit zwischen der Siegelschicht (h) des Verpackungselements X) und der Schicht (i) des Verpackungselements Y) im Siegelbereich so eingestellt werden, dass sie größer als die Verbundhaftung zwischen der Schicht aus Haftklebstoff (g) und der Siegelschicht (h) bzw. einer Schichtfolge umfassend die Siegelschicht (h) ist. Die Siegelbedingungen sind im Allgemeinen durch einfache Vorversuche feststellbar. Damit wird bewirkt, dass sich beim ersten Öffnen der Verpackung im Siegelnahtbereich die Schicht (h) von der Schicht (g) trennt und so die Haftklebstoff-Schicht (g) freigegeben wird, wodurch ein problemloses Wiederverschließen für eine verbesserte, weitere Lagerung des verbleibenden Füllgutes möglich ist. Um dies zu gewährleisten, muss die Siegelfestigkeit (gemessen gemäß den Angaben in der vorliegenden Anmeldung in N/15 mm) um wenigstens 0,5 N/15 mm größer sein als die vorstehend erwähnte Verbundhaftung.

Die Heißsiegelung kann auch mit Hilfe von Ultraschall, Mikrowellen oder IR-Strahlung als Energiequelle durchgeführt werden.

So gelingt es, dass beim ersten Öffnen der Verpackung der im Bereich der Siegelnaht befindliche Teil der Siegelschicht (h) auf der Schicht (i) des Verpackungselementes Y) verbleibt, wodurch die Schicht aus Haftklebstoff (g) im vorzugsweise gesamten Bereich der Siegelnaht freigegeben wird.

Die Schichten des Verpackungselementes (X) und/oder das Material des Verpackungselementes (Y) können bedruckt und/oder eingefärbt sein.

Zur Herstellung der erfindungsgemäßen Verpackungen kann die Schichtfolge für das Verpackungselement (X) bzw. die Schicht (i) des Verpackungselementes (Y) nach unterschiedlichen Fertigungsprozessen hergestellt bzw. verarbeitet werden. Hierzu können alle bekannten Herstellungsverfahren eingesetzt werden.

Sofern vorzugsweise das Verpackungselement (Y) als der Behälter, vorzugsweise als die Verpackungsmulde, der erfindungsgemäßen Verpackung fungieren soll, wird die Folie bestehend aus oder umfassend die Schicht (i), vorzugsweise in einer Tiefziehstation zu offenen Behältern mit dauerhaften Strukturen thermogeformt, befüllt und mit dem Verpackungselement (X) als Deckelfolie zu einer erfindungsgemäßen Verpackung versiegelt.

In einer weiteren bevorzugten Ausführung kann auch die Haftklebstoff-Schicht enthaltende Mehrschichtfolie dauerhaft thermogeformt, vorzugsweise zu einem offenen Behälter verformt, mit dem Füllgut befüllt und mit dem Verpackungselement Y) zu der erfindungsgemäßen Verpackung versiegelt werden. In diesem Fall liegt die Wiederverschließanordnung der Verpackung in dem Verpackungsbehälter, vorzugsweise in der Verpackungsmulde.

Vorzugsweise wird zunächst das Verpackungselement, das das Füllgut aufnimmt, zu einem offenen Behälter verformt, der vorzugsweise zum Versiegeln mit dem anderen Verpackungselement eine Auflagefläche, vorzugsweise einen umlaufenden Rand an der Öffnung des Behälters, aufweist. Diese Auflagefläche kann vorzugsweise bereits durch die Wandstärke der zu offenen Behältern geformten Folie gegeben sein.

Bei den beiden Verpackungselementen X) bzw. Y) handelt es sich vorzugsweise jeweils um einen Deckel bzw. eine Verpackungsmulde zur Aufnahme eines Füllguts, bevorzugt zur Aufnahme eines Lebensmittels. Das Lebensmittel kann dabei sowohl in fester Form als auch in flüssiger Form, vorzugsweise in fester Form, ggf. in mehreren Teilen, vorliegen.

In einer bevorzugten Ausführungsform ist das Verpackungselement (X) die Deckelfolie und das Verpackungselement (Y) der dauerhaft thermogeformte Verpackungsbehälter, vorzugsweise die Verpackungsmulde.

Die erfindungsgemäßen Verpackungen eigenen sich bevorzugt zur Verpackung von Lebensmitteln, wie Käse, Wurst, Schinken, Kuchen, Süßigkeiten, Fleischwaren, Soßen, Getränken, Joghurt, Gewürzen, Reis, Hülsenfrüchten, Obst usw., die insbesondere zum mehrmaligen Verbrauch bzw. Verzehr vorgesehen sind. Dies gilt auch für die Verpackung von Gütern jeder Art, die erst nach und nach verbraucht werden.

Die erfindungsgemäße Verpackung eignet sich ganz besonders bevorzugt zur Verpackung von frischen Lebensmitteln, die insbesondere wässrige Flüssigkeiten absondern können, wie Frischfleisch jeder Art.

Die erfindungsgemäße Verpackung zeichnet sich nämlich insbesondere dadurch aus, dass die Siegelfestigkeit zwischen den beiden Verpackungselementen selbst bei Verunreinigung des Siegelnahtbereichs mit dem verpackten Gut, insbesondere einem Fleischsaft, ausreichend hoch gegenüber der Verbundhaftung zwischen Haftklebstoff-Schicht und Siegelschicht ist, so dass die Verpackung wiederverschließbar ist.

In einer bevorzugten Ausführungsform enthält die Verpackung ein Verpackungsgut, vorzugsweise ein Lebensmittel, besonders bevorzugt Frischfleisch, insbesondere vom Hähnchen, Pute, Rind oder Schwein, vorzugsweise in Teilen.

### Bestimmung der Siegelfestigkeit

Die Siegelfestigkeit wird durch die Trennkraft in [N/15 mm] angegeben, die erforderlich ist, um die Verpackungselemente (X) und (Y), vorzugsweise vorliegend als Mulde und Deckelfolie, der erfindungsgemäßen Verpackung voneinander zu trennen.

Die Siegelfestigkeit zwischen den Verpackungselementen (X) und (Y) der erfindungsgemäßen Verpackung beruht auf der Siegelfestigkeit zwischen der Siegelschicht (h) der Mehrschichtfolie und der Schicht (i) des Verpackungselementes (Y). Es ist daher ausreichend, die Siegelfestigkeit zwischen einer Folie, welche wenigstens eine Siegelschicht (h) aufweist, und einer Folie bestehend aus der Schicht (i) zu bestimmen. Die Methoden zur Bestimmung der Siegelfestigkeit können auch dazu angewendet werden, um die Auswahl der Polyestermaterialien für den Aufbau der Siegelschicht (h) und der Schicht (i) des Verpackungselementes (Y) auf ausreichende Siegelfestigkeit zu überprüfen.

Zur Bestimmung der Siegelfestigkeit werden ein Teststreifen einer ersten Folie umfassend jeweils eine Siegelschicht (h) und ein Teststreifen aus einer zweiten Folie, welche jeweils eine Breite von 15 mm und eine Länge von ca. 150 mm aufweisen, parallel übereinander gelegt, wobei der Teststreifen der ersten Folie mit seiner Siegelseite, d.h. der Siegelschicht (h) auf eine Seite der zweiten Folie gelegt wird. Mit einem Siegelgerät werden die beiden Streifen entlang der gesamten Breite von 15 mm miteinander versiegelt. Die beiden mit einer Siegelnaht versehenen Teststreifen werden an ihrem längeren, nicht versiegelten Enden in einer Zugprüfungsmaschine so befestigt, dass die voneinander zu trennenden Streifen einen Winkel von ca. 180 °C bilden und voneinander getrennt. Die anderen nicht versiegelten Enden werden dabei nicht in einem bestimmten Winkel fixiert. Die Messstrecke bzw. Messdauer ist so lange, bis die Siegelnaht von 15 mm aufgeht. Über der Messstrecke des Siegelbereichs wird die maximale und mittlere Kraft zur Trennung bestimmt. Als Messgerät für die Prüfung wird eine rechnergesteuerte Zugprüfungsmaschine verwendet. Die in N gemessene Kraft entspricht der Kraft, die benötigt wird, die voneinander zu trennenden beiden Teststreifen entlang der Siegelnaht von 15 mm zu trennen.

### Bestimmung der Verbundhaftung

Die Verbundhaftung wird durch die Trennkraft in [N/15 mm] angegeben, die zum Trennen der Siegelschicht (h) von der Haftklebstoff-Schicht (g) der Mehrschichtfolie der erfindungsgemäßen Verpackung erforderlich ist.

Zur Bestimmung der Verbundhaftung zwischen der Siegelschicht (h) und der Haftklebstoff-Schicht (g) werden ein Teststreifen der Mehrschichtfolie des Verpackungselementes (X) der erfindungsgemäßen Verpackung und ein Teststreifen aus einer einschichtigen Folie aus amorphen Polyethylenterephthalat, welche jeweils eine Breite von 15 mm und eine Länge von ca. 150 mm aufweisen, parallel übereinander gelegt, wobei der Teststreifen der Mehrschichtfolie mit seiner Siegelseite, d.h. der Siegelschicht (h) auf eine der Seiten der einschichtigen Folie gelegt wird. Mit einem Siegelgerät werden die beiden Streifen entlang der gesamten Breite von 15 mm miteinander versiegelt. Der Teststreifen werden im Anschluss in einer Zugprüfungsmaschine so befestigt, dass die voneinander zu trennenden Schichten (Siegelschicht (h) und Haftklebstoff-Schicht (b)) einen Winkel von ca. 180 °C bilden und werden anschließend voneinander getrennt. Über die Messstrecke wird die maximale und mittlere Kraft zur Trennung bestimmt. Als Messgerät für die Prüfung wird eine rechnergesteuerte Zugprüfungsmaschine verwendet. Zur Ermittlung der Verbundhaftung wird dabei ein Kraft-Dehnungsdiagramm aufgezeichnet. Die in N gemessene Kraft entspricht der Kraft, die benötigt wird, um die voneinander zu trennenden Schichten (Siegelschicht (h) und Haftklebstoff-Schicht (g)) des Teststreifens bis zur vollständigen Trennung zu trennen.

Die aufgeführten Beispiele dienen zur Illustration der Erfindung und schränken den erfindungsgemäßen Gedanken nicht ein.

### I. Chemische Charakterisierung der eingesetzten Rohstoffe:

- BOPET:: Biaxial orientiertes Polyethylenterephthalat
- LDPE:: Polyethylen niedriger Dichte
- Haftvermittler:: LLDPE modifiziert mit Maleinsäureanhydrid (MSA)
- EVOH:: Ethylen-Vinylalkohol-Copolymer (Ethylen-Anteil: 38 Mol.-%)
- Hotmelt::
- COPET 1:: Copolyester aus Terepthalsäure und einer Mischung aus Ethylenglykol (70 mol%) und Cyclohexandimethanol (CHDM; 30 mol%) als Polyol-Komponenten; Dichte: 1,27 g/cm³, Glasumwandlungstemperatur T_{g} = 81°C (DSC, Aufheizrate 20 K/min)
- COPET 2:: Eastobond Copolyester 19412 ist ein auf Terephtalsäure basierter Copolyester; Dichte: 1,31 g/cm³, Glasumwandlungstemperatur T_{g} = 52°C (DSC, Aufheizrate 20 K/min)
- A-PET:: amorphes Polyethylenterephthalat; Dichte: 1,34 g/cm³; Glasumwandlungstemperatur T_{g} = 71 °C (DSC, Aufheizrate 20 K/min)

### II. Herstellung der erfindungsgemäßen Verpackungen B1 und B2 bzw. der Vergleichsverpackungen V1 und V2

### Es wurden die Verpackungen B1 und V1 wie folgt hergestellt:

Die aus den Schichten (c), (d), (e), (f), (g) und (h) bestehende Mehrschichtfolie, die als Deckelfolie bei der erfindungsgemäßen Verpackung bzw. bei Vergleichsverpackungen zum Einsatz kommt, wurde zunächst jeweils als 6-schichtige Mehrschichtfolie durch Blasfolien-Co-Extrusion hergestellt. Die einzelnen vorstehend genannten Schichten der so erhaltenen Folien grenzen dabei jeweils in der angegebenen Reihenfolge unmittelbar aneinander an, in der sie nachstehend aufgeführt sind. Die Schicht (c) der so erhaltenen Mehrschichtfolie wurde anschließend mit einer Trägerschicht (a) mit Hilfe eines Polyurethan-Kaschier-Klebstoffs (Schicht (b)) verbunden, so dass jeweils mit der Klebstoffschicht (b) eine 9-schichtige Mehrschichtfolie als Deckelfolie für die Verpackungen **B1** bzw. **V1** erhalten wurde. Die Mehrschichtfolien für die Verpackung **B1** bzw. **V1** weisen jeweils den Schichtaufbau gemäß der nachstehenden *Tabelle 1* und eine Gesamtschichtdicke von 54 µm auf.

**Tabelle 1 - Deckelfolien für die Verpackungen B1 bzw. V1**

| Schichtaufbau | Rohstoffe **B1** | Rohstoffe **V1** | Schichtdicke |
|---|---|---|---|
| Trägerschicht (a) | BOPET | BOPET | 12 µm |
| Klebstoffschicht (b) | PUR | PUR | 2 µm |
| Schicht (c) | LDPE | LDPE | 16 µm |
| Haftvermittlerschicht (d) | MSA-modifiziertes LLDPE | MSA-modifiziertes LLDPE | 3 µm |
| Barriereschicht (e) | EVOH | EVOH | 3 µm |
| Haftvermittlerschicht (f) | MSA-modifiziertes LLDPE | MSA-modifiziertes LLDPE | 3 µm |
| Haftklebstoff-Schicht (g) | Hotmelt | Hotmelt | 10 µm |
| Siegelschicht (h) | COPET 1 | A-PET | 5 µm |

Zur Herstellung der Verpackung **B1** bzw. **V1** wurden die Mehrschichtfolien jeweils mit ihrer Siegelschicht (h) gegen eine Verpackungsmulde bestehend aus A-PET (Schicht (i)) gesiegelt.

Die Versiegelung wurde jeweils mit einem Siegelgerät (Model Typ Sentinel Brand Machine Model 24 ASG) durchgeführt.

Die Versiegelung erfolgte bei einer Temperatur von 120°C für zwei Sekunden lang. Die Siegelbacken waren dabei glatt, 25 mm breit, nur einseitig beheizt und einseitig mit Teflon beschichtet.

Gemäß dem Herstellungsverfahren der erfindungsgemäßen Verpackung **B1** bzw. der Vergleichsverpackung **V1** wurde eine weitere erfindungsgemäße Verpackung **B2** bzw. eine weitere Vergleichsverpackung **V2** hergestellt. Diesmal wurden die Siegelnähte jedoch jeweils mit Fleischsaft kontaminiert, indem ein Stück Putenfleisch mit leichtem Druck über den Siegelnahtbereich der Verpackungsmulde gestrichen wurde.

### III. Bestimmung des Öffnungsverhaltens der Verpackungen

Im Falle der Verpackungen **V1** und **B1** wurde die Siegelschicht (h) beim ersten Öffnen der Verpackung im Siegelnahtbereich durchrissen und von der dahinter liegenden Hotmelt-Schicht (g) abgezogen, so dass anschließend ein Wiederverschluss funktionierte.

Die erfindungsgemäße Verpackung **B2** zeigte trotz Kontamination im Siegelnahtbereich dasselbe Öffnungsverhalten wie die Verpackung **B1** bzw. **V1** und damit einen ungestörten Wiederverschluss.

Bei der Vergleichsverpackung **V2** wurde dagegen die Haftklebstoff-Schicht beim ersten Öffnen nicht freigelegt, sondern stattdessen die Siegelnaht zwischen der Siegelschicht (h) der Deckelfolie und der Verpackungsmulde (Schicht (i)) aufgetrennt, so dass die geöffnete Verpackung nicht wiederverschließbar war.

### IV. Bestimmung der Verbundhaftung

Die Verbundhaftung zwischen der Siegelschicht (h) und der Haftklebstoff-Schicht (g) der Deckelfolie der Verpackung **V1** bzw. **V2** wurde nach der vorstehend beschriebenen Methode bestimmt. Die Teststreifen wurden dabei in einer Zugprüfmaschine (Zwick Z 2,5; Kraftmesskopf 100 N) befestigt und voneinander mit einer Geschwindigkeit von 100 mm/min getrennt.

Es wurde eine Verbundhaftung von 3 N/15 mm festgestellt.

### V. Bestimmung der Siegelnahtfestigkeit

Die Siegelfestigkeit zwischen der Siegelschicht (h) der Deckefolie (X) und der Schicht (i) des Verpackungsbehälters (Y) wurde wie folgt in einem Vorversuch bestimmt.

Dazu wurden die nachfolgend aufgeführten dreischichtigen Verbundfolien **B3, V3** und **V4** hergestellt, indem jeweils eine 12 µm dicke BOPET-Schicht (Trägerschicht (a)) mittels eines Polyurethan-Kaschier-Klebstoffs mit einer 50 µm dicken Copolyester-Gießfolie (Cast-Folie) (Siegelschicht (h)) verbunden wurde.

**Tabelle 2 - Mehrschichtfolien B3, V3 und V4**

| Verbundfolie | **B3** | **V3** | **V4** |
|---|---|---|---|
| Trägerschicht (a) | BOPET (12 µm) | BOPET (12 µm) | BOPET (12 µm) |
| Klebstoffschicht (b) | PUR (2 µm) | PUR (2 µm) | PUR (2 µm) |
| Siegelschicht (h) | COPET 1 (50 µm) | COPET 2 (50 µm) | A-PET (50 µm) |

Zur Ermittlung der Siegelfestigkeit wurde jeweils ein 15 mm breiter Folienstreifen der Verbundfolien **B3**, **V3** und **V4** bei einer Temperatur von 120°C (Siegelzeit: 2 s; Siegeldruck: 5 bar) gegen eine 300 µm dicke Cast-Folie aus A-PET gesiegelt und anschließend die Siegelfestigkeit zwischen der Siegelschicht (h) der Mehrschichtfolien **B3**, **V3** und **V4** und der A-PET-Cast-Folie nach der vorstehend beschriebenen Methode bestimmt. Die Teststreifen wurden dabei in einer Zugprüfmaschine (Zwick Z 2,5; Kraftmesskopf 100 N) befestigt und voneinander mit einer Geschwindigkeit von 100 mm/min getrennt.

Zur Ermittlung der Siegelfestigkeit zwischen der Siegelschicht (h) der jeweiligen Mehrschichtfolien **B3**, **V3** und **V4** und der A-PET-Cast-Folie nach Kontamination des Siegelnahtbereiches wurde jeweils die Siegelschicht eines 15 mm breiter Folienstreifens der Verbundfolien **B3**, **V3** und **V4** sowie eines Folienstreifens der A-PET-Cast-Folie mit Putenfleischsaft kontaminiert, indem ein Stück Putenfleisch mit leichtem Druck auf den Siegelnahtbereich jeder der beiden Folien gestrichen wurde.

Anschließend wurden die kontaminierten Bereiche der Verbundfolie und der A-PET-Cast-Folie bei einer Temperatur von 120°C (Siegelzeit: 2 s; Siegeldruck: 5 bar) gegeneinander gesiegelt und die Siegelfestigkeit nach der vorstehend beschriebenen Methode bestimmt.

Die gemessenen Werte sind in der nachstehenden *Tabelle 3* aufgeführt.

**Tabelle 3 - Siegelnahtfestigkeit zwischen A-PET-Cast-Folie und der Siegelschicht der Verbundfolien B3, V3 und V4 mit bzw. ohne vorherige Kontamination des Siegelnahtbereiches.**

| Siegel partner | Siegelfestigkeit (N/15 mm) Siegelnahtbereich nicht kontaminiert | Siegelfestigkeit (N/15 mm) Siegelnahtbereich kontaminiert |
|---|---|---|
| A-PET / COPET 1 (**B3**) | 24 | 4 |
| A-PET / COPET 2 (V3) | 22 | 3 |
| A-PET / A-PET (**V4**) | 19 | 0,3 |

### VII. Bestimmung der Siegelnahtfestigkeit in Abhängigkeit von der Art der Kontamination

Es wurde jeweils 100 µm dicke Folienstreifen aus A-PET bzw. COPET-1 angefertigt und mit Schweinefleisch, Rinderfleisch oder Putenfleisch kontaminiert. Anschließend wurden jeweils zwei dieser Folienstreifen mit den in der nachstehenden Tabelle 4 aufgeführten Kombinationen bei einer Temperatur von 120°C (Siegelzeit: 2 s; Siegeldruck: 5 bar) gegeneinander gesiegelt und die Siegelfestigkeit nach der vorstehend beschriebenen Methode bestimmt.

**Tabelle 4 - Siegelfestigkeit zwischen A-PET und COPET 1 bzw. A-PET bei Kontamination der Siegelnaht**

| Siegel partner | Kontamination durch Saft von | Siegelfestigkeit (N/15 mm) Siegelnahtbereich kontaminiert |
|---|---|---|
| A-PET / COPET 1 | Rinderfleisch | 4,3 |
| A-PET / COPET 1 | Schweinefleisch | 6,0 |
| A-PET / COPET 1 | Putenfleisch | 4,0 |
| A-PET / A-PET | Rinderfleisch | 0,4 |
| A-PET / A-PET | Schweinefleisch | 1,8 |
| A-PET / A-PET | Putenfleisch | 0,3 |

## Patentansprüche

1. Eine wiederverschließbare Verpackung aus zwei miteinander verbundenen Verpackungselementen (X) und (Y),
wobei das Verpackungselement (X) eine Mehrschichtfolie aufweist umfassend
- wenigstens eine Trägerschicht (a);
- wenigstens eine Schicht (g) aus Haftklebstoff aufgebaut aus wenigstens einem Polymeren ausgewählt aus der Gruppe umfassend Polymere und Copolymere von Vinylethern, Copolymere aus Butadien und Styrol, Copolymere aus Styrol und Isopren, Copolymere aus Styrol, Butadien und Ethylen, Polyurethane, Polychloroprene, Polyisobutylene, Polyisoprene, Butylkautschuk und Naturlatex; und
- wenigstens eine heißsiegelbare Siegelschicht (h) aus wenigstens einem nicht kristallisationsfahigen Copolyester;
wobei das Verpackungselement (Y) eine ggf. mehrschichtige Kunststoff-Folie aufweist umfassend eine Schicht (i), welche aus wenigstens einem amorphen Polyester aufgebaut ist; und wobei die beiden Verpackungselemente (X) und (Y) über eine Siegelung derart verbunden sind, dass im Siegelnahtbereich die Siegelfestigkeit, gemessen gemäß den Angaben in der Beschreibung, zwischen der Siegelschicht (h) und der Schicht (i) größer ist als die Verbundhaftung zwischen der Haftklebstoff-Schicht (g) und der Siegelschicht (h) bzw. einer Schichtfolge umfassend die Siegelschicht (h), wodurch beim ersten Öffnen der Verpackung die Haftklebstoff-Schicht (g) im Bereich der Siegelnaht zum Wiederverschließen freigegeben wird,
**dadurch gekennzeichnet, dass** der nicht kristallisationsfähige Copolyester der Siegelschicht (h)
- als Diol-Komponente eine Mischung aus α) 10-50 Mol.-%, vorzugsweise 20-40 Mol.-%, wenigstens eines cycloaliphatischen (C₆-C₁₅)-Diols und β) 90-50 Mol.-%, vorzugsweise 80-60 Mol.-%, wenigstens eines linearen, aliphatischen (C₂-C₁₀)-Diols; und
- als Dicarbonsäure-Komponente Terephthalsäure oder eine Mischung aus 50-90 Mol.-% Terephthalsäure und γ) 10-50 Mol.-% Isophthalsäure und/oder wenigstens einer aliphatischen (C₆-C₁₂)-Dicarbonsäure
aufweist.

2. Eine Verpackung gemäß Anspruch 1, **dadurch gekennzeichnet, dass** die Schicht (i) des Verpackungselements (Y) aus wenigstens einem amorphen Polyalkylenterephthalat ausgewählt aus der Gruppe bestehend aus Polyethylenterephthalat, Polypropylenterephthalat und Polybutylenterephthalat, besonders bevorzugt Polyethylenterephthalat, aufgebaut ist.

3. Eine Verpackung gemäß Anspruch 1 oder 2, **dadurch gekennzeichnet, dass** als cycloaliphatisches Diol 1,4-Cyclohexandimethanol vorliegt.

4. Eine Verpackung gemäß einem der Ansprüche 1 bis 3, **dadurch gekennzeichnet, dass** der Copolyester der Siegelschicht (h) als Dicarbonsäure-Komponente Terephthalsäure aufweist.

5. Eine Verpackung gemäß einem der Ansprüche 1 bis 4, **dadurch gekennzeichnet, dass** die Glasübergangstemperatur (T_{g}) des Copolyesters der Siegelschicht (h) 70 °C bis 90 °C, vorzugsweise 75 °C bis 85 °C, beträgt, wobei die Glasübergangstemperatur mittels DSC nach ISO 11357-2 (1999) bestimmt wird.

6. Eine Verpackung gemäß einem der Ansprüche 1 bis 5, **dadurch gekennzeichnet, dass** die Siegelfestigkeit im Siegelnahtbereich um wenigstens 0,5 N/15 mm, vorzugsweise wenigstens 1 N/15 mm, besonders bevorzugt wenigstens 1,5 N/15 mm, höher ist als die Verbundhaftung in N/15 mm zwischen der Haftklebstoff-Schicht und der Siegelschicht (h).

7. Eine Verpackung gemäß einem der Ansprüche 1 bis 6, **dadurch gekennzeichnet, dass** die Dicke der Siegelschicht (h) 3 bis 20 µm, vorzugsweise 4 bis 10 µm, beträgt.

8. Eine Verpackung gemäß einem der Ansprüche 1 bis 7, **dadurch gekennzeichnet, dass** die Dicke der Haftklebstoff-Schicht (g) 2 bis 20 µm, vorzugsweise 3 bis 15 µm, beträgt.

9. Eine Verpackung gemäß einem der Ansprüche 1 bis 8, **dadurch gekennzeichnet, dass** die Trägerschicht (a) aus wenigstens einem thermoplastischen Polymeren aufgebaut ist.

10. Eine Verpackung gemäß einem der Ansprüche 1 bis 9, **dadurch gekennzeichnet, dass** die Mehrschichtfolie des Verpackungselementes (X) eine Schichtfolge aus
- einer Trägerschicht (a),
- ggf. einer Klebstoffschicht (b),
- ggf. einer Schicht (c) aus wenigstens einem thermoplastischen Olefin-Homo- oder Copolymeren,
- ggf. einer Haftvermittlerschicht (d),
- einer Barriereschicht (e),
- ggf. einer Haftvermittlerschicht (f),
- einer Haftklebstoff-Schicht (g), und
- einer heißsiegelbaren Siegelschicht (h)
umfasst.

11. Eine Verpackung gemäß Anspruch 10, **dadurch gekennzeichnet, dass** die Barriereschicht (e) eine Barriereschicht gegen Gase, vorzugsweise Sauerstoff, und/oder gegen Migration niedermolekularer Anteile ist.

12. Eine Verpackung gemäß Anspruch 10 oder 11, **dadurch gekennzeichnet, dass** die Barriereschicht (e) aus wenigstens einem Polymeren ausgewählt aus der Gruppe umfassend Ethylen-Vinylalkohol-Copolymere, zumindest teilverseifte Polyvinylacetate, Polyvinylidenchlorid und Vinylidenchlorid-Copolymere aufgebaut ist.

13. Verpackung gemäß einem der Ansprüche 10 bis 12, **dadurch gekennzeichnet, dass** die Dicke der Barriereschicht (e) 0,5 bis 20 µm, bevorzugt 1 bis 10 µm, beträgt.

14. Eine Verpackung gemäß einem der Ansprüche 10 bis 13, **dadurch gekennzeichnet, dass** die Gesamtdicke der Schichtfolge (a) bis (h) 30 bis 150 µm, bevorzugt 40 bis 80 µm beträgt.

15. Eine Verpackung gemäß einem der Ansprüche 1 bis 14, **dadurch gekennzeichnet, dass** das Verpackungselement (X) als Deckelfolie und das Verpackungselement (Y) als dauerhaft thermogeformte Verpackungsmulde vorliegt.

16. Verwendung einer Verpackung gemäß einem der Ansprüche 1 bis 15 für die mehrmalige Entnahme von verpackten Gütern, vorzugsweise von Lebensmitteln jeder Art, besonders bevorzugt von Frischfleischprodukten.

17. Verwendung nach Anspruch 16 für mehrteiliges Frischfleisch.

18. Verwendung nach Anspruch 17, **dadurch gekennzeichnet, dass** das mehrteilige Frischfleisch von Hähnchen, Pute, Rind oder Schwein stammt.

## Claims

1. Recloseable packaging made of two packaging elements (X) and (Y) connected to one another,
where the packaging element (X) comprises a multilayer film comprising
- at least one supportive layer (a);
- at least one layer (g) made of pressure-sensitive adhesive composed of at least one polymer selected from the group comprising polymers and copolymers of vinyl ethers, copolymers of butadiene and styrene, copolymers of styrene and isoprene, copolymers of styrene, butadiene and ethylene, polyurethanes, polychloroprenes, polyisobutylenes, polyisoprenes, butyl rubber and natural latex; and
- at least one heat-sealable layer (h) made of at least one non-crystallizable copolyester;
where the packaging element (Y) comprises an optionally multilayer plastics film comprising a layer (i) which is composed of at least one amorphous polyester; and where the two packaging elements (X) and (Y) have connection by way of a seal in a manner such that the seal seam strip in the seal seam region, measured in accordance with the instructions in the Description, between the sealable layer (h) and the layer (i) is greater than the adhesion between the pressure-sensitive-adhesive layer (g) and the sealable layer (h) or a layer sequence comprising the sealable layer (h), and therefore on the first opening of the packaging the pressure-sensitive-adhesive layer (g) is released in the region of the seal seam for reclosure, **characterized in that** the non-crystallizable copolyester of the sealable layer (h) comprises
- as diol component a mixture of α) 10-50 mol%, preferably 20-40 mol%, of at least one cycloaliphatic (C₆-C₁₅) diol and β) 90-50 mol%, preferably 80-60 mol%, of at least one linear aliphatic (C₂-C₁₀) diol; and
- as dicarboxylic acid component terephthalic acid or a mixture of 50-90 mol% of terephthalic acid and γ) 10-50 mol% of isophthalic acid and/or of at least one aliphatic (C₆-C₁₂) dicarboxylic acid.

2. Packaging according to Claim 1, **characterized in that** the layer (i) of the packaging element (Y) is composed of at least one amorphous polyalkylene terephthalate selected from the group consisting of polyethylene terephthalate, polypropylene terephthalate and polybutylene terephthalate, particularly preferably being composed of polyethylene terephthalate.

3. Packaging according to Claim 1 or 2, **characterized in that** 1,4-cyclohexanedimethanol is present as cycloaliphatic diol.

4. Packaging according to any of Claims 1 to 3, **characterized in that** the copolyester of the sealable layer (h) comprises terephthalic acid as dicarboxylic acid component.

5. Packaging according to any of Claims 1 to 4, **characterized in that** the glass transition temperature (T_{g}) of the copolyester of the sealable layer (h) is 70°C to 90°C, preferably 75°C to 85°C, where the glass transition temperature is determined by means of DSC in accordance with ISO 11357-2 (1999).

6. Packaging according to any of Claims 1 to 5, **characterized in that** the seal seam strength in the seal seam region is higher by at least 0.5 N/15 mm, preferably at least 1 N/15 mm, particularly preferably at least 1.5 N/15 mm, than the adhesion in N/15 mm between the pressure-sensitive-adhesive layer and the sealable layer (h).

7. Packaging according to any of Claims 1 to 6, **characterized in that** the thickness of the sealable layer (h) is 3 to 20 µm, preferably 4 to 10 µm.

8. Packaging according to any of Claims 1 to 7, **characterized in that** the thickness of the pressure-sensitive-adhesive layer (g) is 2 to 20 µm, preferably 3 to 15 µm.

9. Packaging according to any of Claims 1 to 8, **characterized in that** the supportive layer (a) is composed of at least one thermoplastic polymer.

10. Packaging according to any of Claims 1 to 9, **characterized in that** the multilayer film of the packaging element (X) comprises a layer sequence made of
- a supportive layer (a),
- optionally an adhesive layer (b),
- optionally a layer (c) made of at least one thermoplastic olefin homo- or copolymer,
- optionally an adhesion-promoter layer (d),
- a barrier layer (e),
- optionally an adhesion-promoter layer (f),
- a pressure-sensitive-adhesive layer (g), and
- a heat-sealable layer (h).

11. Packaging according to Claim 10, **characterized in that** the barrier layer (e) is a barrier layer against gases, preferably oxygen, and/or against migration of low-molecular-weight fractions.

12. Packaging according to Claim 10 or 11, **characterized in that** the barrier layer (e) is composed of at least one polymer selected from the group comprising ethylene-vinyl alcohol copolymers, at least partially hydrolysed polyvinyl acetates, polyvinylidene chloride and vinylidene chloride copolymers.

13. Packaging according to any of Claims 10 to 12, **characterized in that** the thickness of the barrier layer (e) is 0.5 to 20 µm, preferably 1 to 10 µm.

14. Packaging according to any of Claims 10 to 13, **characterized in that** the total thickness of the layer sequence (a) to (h) is 30 to 150 µm, preferably 40 to 80 µm.

15. Packaging according to any of Claims 1 to 14, **characterized in that** the packaging element (X) is present as lid film and the packaging element (Y) is present as durably thermoformed packaging tray.

16. Use of a packaging according to any of Claims 1 to 15 for the repeated removal of packaged goods, preferably of foods of any type, particularly preferably of fresh meat products.

17. Use according to Claim 16 for portions of fresh meat.

18. Use according to Claim 17, **characterized in that** the portions of fresh meat are chicken, turkey, beef or pork.

## Revendications

1. Emballage refermable composé de deux éléments d'emballage (X) et (Y) reliés l'un à l'autre, l'élément d'emballage (X) présentant une feuille multicouche comprenant
- au moins une couche de support (a) ;
- au moins une couche (g) composée d'un autoadhésif construit à partir d'au moins un polymère choisi dans le groupe comprenant des polymères et des copolymères d'éthers de vinyle, des copolymères de butadiène et de styrène, des copolymères de styrène et isoprène, des copolymères de styrène, de butadiène et d'éthylène, des polyuréthanes, des polychloroprènes, des polyisobutylènes, des polyisoprènes, un caoutchouc de butyle et un latex naturel ; et
- au moins une couche de scellement thermoscellable (h) composée d'au moins un copolyester qui n'est pas cristallisable ;
l'élément d'emballage (Y) présentant une feuille de plastique éventuellement multicouche comprenant une couche (i), qui est construite à partir d'au moins un polyester amorphe ; et
les deux éléments d'emballage (X) et (Y) étant reliés par l'intermédiaire d'un scellement de telle manière que la résistance de scellement dans la zone de soudure de scellement, mesurée selon les indications dans la description, entre la couche de scellement (h) et la couche (i) est supérieure à l'adhérence de composite entre la couche autoadhésive (g) et la couche de scellement (h) respectivement une suite de couches comprenant la couche de scellement (h), par lequel lors de la première ouverture de l'emballage la couche autoadhésive (g), dans la zone de soudure de scellement, est libérée pour refermeture, **caractérisé en ce que** le copolyester non cristallisable de la couche de scellement (h) présente
- en tant que composant de diol, un mélange de α) 10 à 50 % en moles, de préférence 20 à 40 % en moles, d'au moins un diol cycloaliphatique en C₆₋₁₅ et de β) 90 à 50 % en moles, de préférence 80 à 60 % en moles, d'au moins un diol aliphatique, linéaire en C₂₋₁₀ ; et
- en tant que composant d'acide dicarboxylique, de l'acide téréphtalique ou un mélange de 50 à 90 % en moles d'acide téréphtalique et de γ) 10 à 50 % en moles d'acide isophtalique et/ou d'au moins un acide dicarboxylique aliphatique en C₆₋₁₂.

2. Emballage selon la revendication 1, **caractérisé en ce que** la couche (i) de l'élément d'emballage (Y) est construite à partir d'au moins un poly(téréphtalate d'alkylène) amorphe choisi dans le groupe constitué par un poly(téréphtalate d'éthylène), un poly(téréphtalate de propylène) et un poly(téréphtalate de butylène), particulièrement préférablement un poly(téréphtalate d'éthylène).

3. Emballage selon la revendication 1 ou 2, **caractérisé en ce qu'**un 1,4-cyclohexanediméthanol est présent en tant que diol cycloaliphatique.

4. Emballage selon l'une quelconque des revendications 1 à 3, **caractérisé en ce que** le copolyester de la couche de scellement (h) présente de l'acide téréphtalique en tant que composant d'acide dicarboxylique.

5. Emballage selon l'une quelconque des revendications 1 à 4, **caractérisé en ce que** la température de transition vitreuse (T_{g}) du copolyester de la couche de scellement (h) est de 70 °C à 90 °C, de préférence 75 °C à 85 °C, la température de transition vitreuse étant déterminée au moyen de DSC selon la norme ISO 11357-2 (1999).

6. Emballage selon l'une quelconque des revendications 1 à 5, **caractérisé en ce que** la résistance de scellement dans la zone de soudure de scellement est au moins 0,5 N/15 mm, de préférence au moins 1 N/15 mm, particulièrement préférablement au moins 1,5 N/15 mm, supérieure à l'adhérence de composite en N/15 mm entre la couche autoadhésive et la couche de scellement (h).

7. Emballage selon l'une quelconque des revendications 1 à 6, **caractérisé en ce que** l'épaisseur de la couche de scellement (h) est de 3 à 20 µm, de préférence 4 à 10 µm.

8. Emballage selon l'une quelconque des revendications 1 à 7, **caractérisé en ce que** l'épaisseur de la couche autoadhésive (g) est de 2 à 20 µm, de préférence 3 à 15 µm.

9. Emballage selon l'une quelconque des revendications 1 à 8, **caractérisé en ce que** la couche de support (a) est construite à partir d'au moins un polymère thermoplastique.

10. Emballage selon l'une quelconque des revendications 1 à 9, **caractérisé en ce que** la feuille multicouche de l'élément d'emballage (X) comprend une suite de couches composée
- d'une couche de support (a),
- éventuellement d'une couche adhésive (b),
- éventuellement d'une couche (c) composée d'au moins un homopolymère ou copolymère d'oléfine thermoplastique,
- éventuellement d'une couche de promoteur d'adhérence (d),
- d'une couche barrière (e),
- éventuellement d'une couche de promoteur d'adhérence (f),
- d'une couche autoadhésive (g), et
- d'une couche de scellement thermoscellable (h).

11. Emballage selon la revendication 10, **caractérisé en ce que** la couche barrière (e) est une couche barrière contre des gaz, de préférence l'oxygène, et/ou contre la migration de fractions de bas poids moléculaire.

12. Emballage selon la revendication 10 ou 11, **caractérisé en ce que** la couche barrière (e) est construite à partir d'au moins un polymère choisi dans le groupe comprenant des copolymères d'éthylène-alcool vinylique, des poly(acétates de vinyle) au moins partiellement saponifiés, un poly(chlorure de vinylidène) et des copolymères de chlorure de vinylidène.

13. Emballage selon l'une quelconque des revendications 10 à 12, **caractérisé en ce que** l'épaisseur de la couche barrière (e) est de 0,5 à 20 µm, préférablement 1 à 10 µm.

14. Emballage selon l'une quelconque des revendications 10 à 13, **caractérisé en ce que** l'épaisseur totale de la suite de couches (a) à (h) est de 30 à 150 µm, préférablement 40 à 80 µm.

15. Emballage selon l'une quelconque des revendications 1 à 14, **caractérisé en ce que** l'élément d'emballage (X) est présent en tant que feuille de couvercle et l'élément d'emballage (Y) est présent en tant que barquette d'emballage durablement thermoformée.

16. Utilisation d'un emballage selon l'une quelconque des revendications 1 à 15 pour le prélèvement multiple de produits emballés, de préférence de produits alimentaires de toutes sortes, particulièrement préférablement de produits de viande fraîche.

17. Utilisation selon la revendication 16 pour de la viande fraîche en plusieurs morceaux.

18. Utilisation selon la revendication 17, **caractérisée en ce que** la viande fraîche en plusieurs morceaux provient de poulet, de dinde, de bœuf ou de porc.
